# FASCICULE DE BREVET EUROPEEN

(11) **EP 0 442 765 B1**
(45) Date de publication et mention de la délivrance du brevet: **16.06.1993**
(21) Numéro de dépôt: 91400057.5
(22) Date de dépôt: 11.01.1991
(51) Int. Cl.: B60N 2/04

(54) **Dispositif de montage et fixation d'un siège apte à coulisser sur le plancher d'un véhicule automobile**
Vorrichtung zum Montieren und Befestigen eines Sitzes, der auf dem Boden eines Kraftfahrzeuges verschiebbar ist
Device for mounting and fixing a seat, suited to slide on the floor of a motor vehicle

(30) Priorité: 16.02.1990 FR 9001924
(43) Date de publication de la demande: 21.08.1991
(73) Titulaire: AUTOMOBILES PEUGEOT, 75116 Paris (FR); AUTOMOBILES CITROEN, 92200 Neuilly-sur-Seine (FR)
(72) Inventeur: Clement, Daniel, F-78170 La Celle Saint Cloud (FR)
(74) Mandataire: Durand, Yves Armand Louis

(56) Documents cités:
- EP-A- 0 182 990
- US-A- 3 961 767
- US-A- 4 691 946

## Description

La présente invention a pour objet un dispositif de montage et fixation d'un siège de véhicule, tel qu'un siège avant de véhicule automobile par exemple.

On a proposé depuis longtemps de monter des sièges par l'intermédiaire de cales sur le plancher d'un véhicule à l'aide de vis. Cependant, un tel montage ne permet pas le réglage de la position du siège par rapport au plancher du véhicule.

Aussi, pour remédier à cet inconvénient, on a proposé des sièges comportant des coulisses fixées au plancher du véhicule et coopérant avec des glissières solidaires du siège, de façon à permettre le réglage de la position de ce dernier vers l'avant ou vers l'arrière de l'habitacle du véhicule. Toutefois, avec un tel système, les vis et les cales nécessaires au montage doivent être rapportées manuellement lors du montage du siège dans l'habitacle, ce qui rend difficile, voire dangereuse, l'automatisation de cette opération. De plus, ces systèmes ne permettent pas le maintien provisoire du siège en position montée sur le plancher afin de pouvoir reporter le serrage des vis de fixation à une phase ultérieure de l'assemblage du véhicule.

Aussi, la présente invention a pour but de résoudre tous ces problèmes en proposant un système de montage et fixation qui forme avec le siège un ensemble monobloc apte à être monté sur le plancher d'un véhicule à l'aide d'un robot, et grâce auquel ensemble il est possible d'effectuer efficacement, rapidement et sans danger, d'une part les opérations qui nécessitent une intervention manuelle et d'autre part les opérations automatisées. En outre, l'invention a pour but de permettre le maintien d'un revêtement d'isolation sur le plancher du véhicule, à proximité des points de fixation du siège.

A cet effet, l'invention a pour objet un dispositif de montage et fixation d'un siège apte à coulisser sur le plancher d'un véhicule automobile, du type comprenant au moins une coulisse qui est associée à une glissière solidaire du siège et qui est fixée sur le plancher du véhicule par l'intermédiaire de cales ou analogue et à l'aide de vis, caractérisé en ce que lesdites cales comportent une portion permettant le clippage des cales sur la coulisse et au moins certaines cales sont munies d'au moins un perçage apte à retenir positivement les vis en position prête au vissage dans le plancher, de façon que le siège forme un ensemble monobloc prêt à être monté sur le plancher du véhicule au moyen d'un robot par exemple.

Suivant une autre caractéristique de ce dispositif, au moins l'une des cales d'appui comporte une autre portion permettant le clippage de cette cale sur le plancher du véhicule.

On précisera encore ici qu'au moins l'une des cales est clippée sur l'une des branches d'un élément en forme d'équerre dont l'autre branche est solidaire de la coulisse.

Suivant encore une autre caractéristique de l'invention, les cales précitées sont munies d'une collerette de maintien d'un revêtement sur le plancher du véhicule.

Le dispositif suivant cette invention est encore caractérisé en ce que les portions de clippage des cales sur la coulisse présentent la forme de tétons ou analogues.

Mais d'autres avantages et caractéristiques de l'invention apparaîtront mieux dans la description détaillée qui suit et se réfère aux dessins annexés donnés uniquement à titre d'exemple et dans lesquels :
la figure 1 est une vue de côté illustrant une phase du montage d'un siège équipé du dispositif suivant l'invention ;
la figure 2 est une vue partielle et en coupe verticale du dispositif de fixation et montage suivant l'invention ;
la figure 3 est une vue en coupe suivant la ligne III-III de la figure 2, sur laquelle on voit la portion de clippage d'une cale sur un élément en forme d'équerre solidaire d'une coulisse ;
la figure 4 est une vue en coupe d'une cale d'appui, munie d'une collerette de maintien d'un revêtement sur le plancher du véhicule ; et
la figure 5 est une vue en coupe suivant la ligne IV-IV de la figure 2, sur laquelle on voit la portion de clippage d'une cale sur une coulisse.

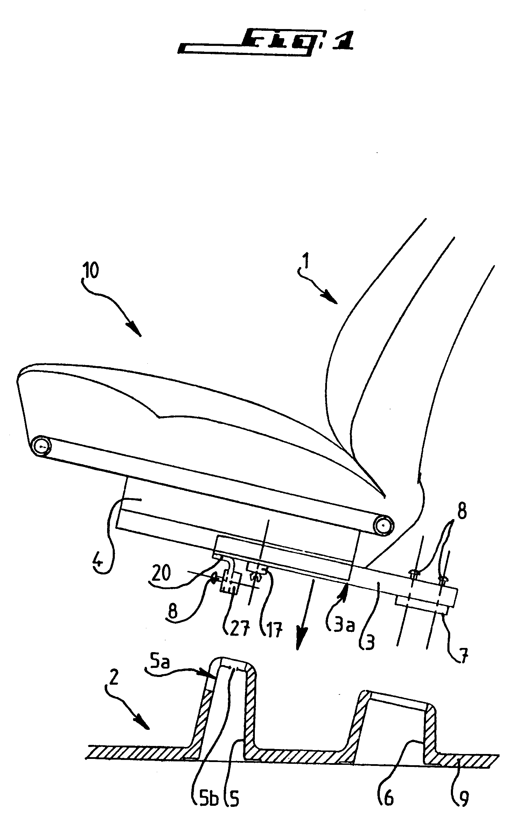

En se reportant à la figure 1 et selon un exemple de réalisation, on voit qu'un dispositif de montage et fixation d'un siège 1 apte à coulisser sur un plancher 2, de véhicule automobile par exemple, comprend deux coulisses parallèles 3 (dont une seule est visible sur les figures), sur chacune desquelles est montée coulissante une glissière 4 fixée sur une partie latérale de l'assise du siège 1.

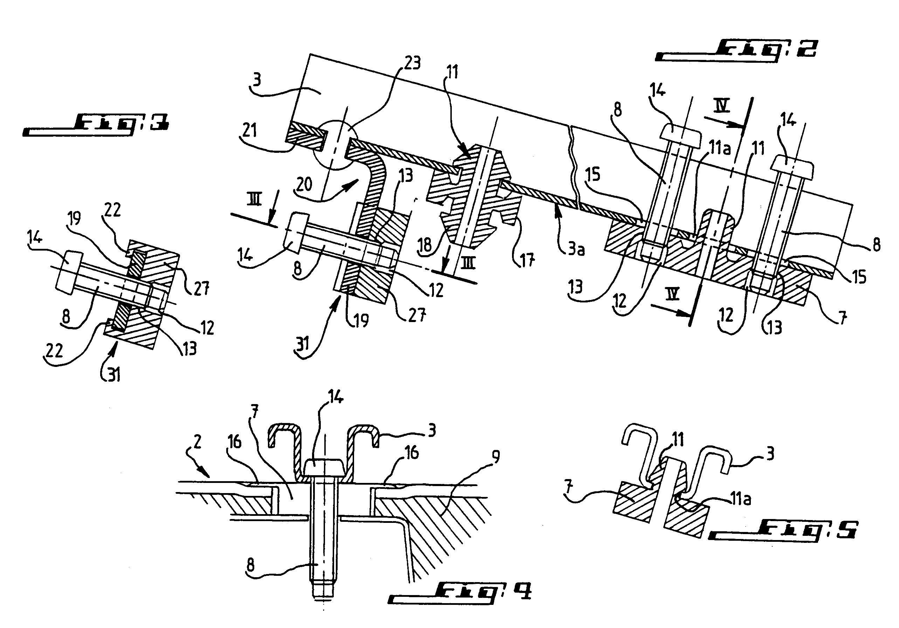

Chacune des deux coulisses 3 s'étend transversalement par rapport à deux traverses 5 et 6 faisant partie du plancher 2, et est constituée, comme on le voit bien sur les figures 4 et 5, par un profilé de section transversale en forme de U dont les deux parois verticales comportent des extrémités recourbées de manière à former deux rampes de guidage pour chaque glissière 4. On a repéré en 7, 17 et 27 des cales d'appui du siège 1 sur le plancher 2, fixées par clippage sur une paroi inférieure 3a de chaque coulisse 3. Les cales 7 et 27 constituent un support de retenue et positionnement préalables des vis 8 de fixation du siège 1.

Par ailleurs, un revêtement d'isolation 9, tel qu'une moquette par exemple, recouvre le plancher 2 et les traverses 5, 6, à l'exception des surfaces sur lesquelles les cales 7, 17 et 27 viennent reposer en position de montage sur le plancher 2.

On voit bien sur la figure 1 que le siège 1 forme un ensemble monobloc 10 prêt à être monté sur le plancher 2 et comprenant initialement les coulisses 3, les cales 7, 17 et 27 ainsi que les vis 8.

En se reportant maintenant aux figures 2 et 5, on voit bien que chaque cale 7 est de forme allongée et comporte en sa partie centrale une portion en forme de téton élastique 11, faisant saillie au travers d'un trou 11a à l'intérieur de la coulisse 3 de manière à permettre le clippage de la cale 7 sur la paroi inférieure 3a de chaque coulisse 3. Deux trous 12 sont prévus de part et d'autre du téton élastique 11 et traversent la cale 7 en regard de deux perçages 15 de la paroi 3a. Chaque trou 12 comporte une portion de diamètre réduit 13 dans laquelle une vis 8, faisant saillie de la coulisse 3, est retenue en position prête au vissage dans le plancher 2 du véhicule.

On précisera ici que, suivant un mode de réalisation illustré par la figure 4, les cales 7 sont munies à leurs périphéries de collerettes 16 de maintien du revêtement d'isolation 9 sur le plancher 2. Il va de soi que, tout comme les cales 7, les cales 17 et 27 qui vont maintenant être décrites peuvent également comporter des collerettes 16 de maintien du revêtement 9.

En se reportant à la figure 2, on voit que chaque cale 17 est d'une part munie d'un téton élastique 11 similaire à celui des cales 7 décrites plus haut et comporte d'autre part, sur sa face opposée audit téton 11, une autre portion en forme de téton conique 18 permettant le clippage de cette cale dans un trou 5b de la traverse 5, de manière à permettre le maintien provisoire de l'ensemble monobloc 10 sur le plancher 2 jusqu'à l'opération de serrage des vis 8.

Chacune des cales 27, dont une seule est visible sur les figures 2 et 3, comporte en sa partie centrale un trou 12 de positionnement comme pour les autres cales 7 et 17.

Mais, contraitement aux cales 7 et 17, cette cale 27 n'est pas montée sur la paroi inférieure 3a de la coulisse 3, mais est clippée sur une branche 19 d'un élément en forme d'équerre 20, dont l'autre branche repérée en 21 est solidaire de la coulisse 3.

Comme on le voit mieux sur la figure 3, la cale 27 est montée sur l'équerre 20 à l'aide d'une glissière 31 constituée ici par deux rebords parallèles formant languettes 22 qui enserrent les bords latéraux de la branche 19 sur toute la longueur de la cale 27. La branche 21 de l'équerre 20 est, quant à elle, fixée sur la paroi inférieure 3a de la coulisse 3 grâce à un rivet 23, visible sur la figure 2.

On comprend déjà que l'équerre 20 permet à la cale 27 de coopèrer, lors du montage de l'ensemble 10 sur le plancher 2, avec une paroi 5a de la traverse 5, sensiblement perpendiculaire au plancher 2, de façon à effectuer un positionnement de chaque coulisse 3 suivant leur direction longitudinale.

Les différentes étapes du montage et de la fixation de l'ensemble 10 sur le plancher 2 vont maintenant être briévement expliquées en se reportant de nouveau à la figure 1.

Une fois que l'ensemble 10, décrit plus haut a été réalisé, ce dernier est transporté jusqu'à une chaîne d'assemblage du véhicule.

L'ensemble 10 est alors introduit dans l'habitacle du véhicule, par exemple à l'aide d'un robot. La position longitudinale des coulisses 3 solidaires de l'ensemble 10 par rapport au plancher 2 est déterminée par l'intermédiaire des cales 27 que l'on vient faire abuter contre la paroi 5a de la traverse 5. Ensuite, l'ensemble 10 est positionné transversalement en plaçant les tétons coniques 18 des cales 17 en regard des trous 5b de la traverse 5.

L'ensemble 10 est alors abaissé jusqu'à ce que les tétons coniques 18 viennent se clipper dans les trous 5b et que la surface inférieure de la cale 7 repose sur la traverse 6 du plancher 2.

Une fois ce montage et cette fixation provisoire effectués, l'ensemble 10 est définitivement fixé sur le plancher 2 du véhicule par serrage des vis 8 dans les traverses 5 et 6.

Grâce au dispositif décrit précédemment, on peut par conséquent monter et fixer un siège apte à coulisser sur un plancher de véhicule à l'aide d'un robot, tout en séparant les opérations qui nécessitent une intervention manuelle et les opérations effectuées automatiquement.

En outre, les collerettes prévues à la périphérie des cales d'appui de l'ensemble 10 permettent la fixation du revêtement 9 sur les traverses 5, 6 simultanément au montage du siège sur le plancher.

Le dispositif de montage et fixation conçu suivant cette invention pourra équiper tous types de sièges et pourra être monté, par exemple à l'aide de robots, sur des véhicules de type quelconque.

Bien entendu l'invention n'est nullement limitée au mode de réalisation décrit et illustré qui n'a été donné qu'à titre d'exemple.

C'est ainsi que la forme et le nombre de cales d'appui qui sont clippées sur les coulisses peuvent être quelconques et sont fonction, par exemple de la forme et des dimensions des coulisses.

## Revendications

1. Dispositif de montage et fixation d'un siège apte à coulisser sur le plancher d'un véhicule automobile, du type comprenant au moins une coulisse qui est associée à une glissière solidaire du siège et qui est fixée sur le plancher du véhicule par l'intermédiaire de cales ou analogues et à l'aide de vis, caractérisé en ce que lesdites cales (7, 17, 27) comportent une portion (11) permettant le clippage des cales sur la coulisse (3) et au moins certaines cales (7, 27) sont munies d'au moins un perçage (12) apte à retenir positivement les vis (8) en position prête au vissage sur le plancher (2), de façon que le siège (1) forme un ensemble monobloc (10) prêt à être monté sur le plancher (2) du véhicule au moyen d'un robot par exemple.

2. Dispositif selon la revendication 1, caractérisé en ce qu'au moins l'une (17) des cales d'appui comporte au moins une portion (18) permettant le clippage de cette cale sur le plancher (2) du véhicule.

3. Dispositif selon la revendication 1 ou 2, caractérisé en ce qu'au moins l'une (27) des cales est montée sur l'une (19) des branches d'un élément (20) en forme d'équerre dont l'autre branche (21) est solidaire de la coulisse (3).

4. Dispositif selon l'une des revendications précédentes, caractérisé en ce que les cales précitées (7, 17, 27) sont munies d'une collerette (16) de maintien d'un revêtement (9) sur le plancher (2) du véhicule.

5. Dispositif selon l'une des revendications 1, 2 ou 4, caractérisé en ce que les portions de clippage (11) des cales (7, 17) sur la coulisse (3) présentent la forme de tétons ou analogues.

## Patentansprüche

1. Vorrichtung zum Einbauen und Befestigung eines an dem Boden eines Kraftfahrzeugs gleitbaren Sitzes, der wenigstens eine Gleitschiene aufweisenden Gattung, die einer mit dem Sitz fest verbundenen Gleitführung zugeordnet ist und die am Fussboden des Kraftfahrzeugs über Unterlegklötze oder dergleichen und mit Hilfe von Schrauben befestigt ist, dadurch gekennzeichnet, dass die besagten Unterlegklötze (7,17,27) einen das Aufstecken der Unterlegklötze an der Gleitschiene (3) gestattenden Teil (11) aufweisen und wenigstens einige Unterlegklötze (7,27) mit wenigstens einer Bohrung (12) versehen sind, die fähig ist, die Schrauben (8) in einer zum Anschrauben an dem Fussboden (2) bereitstehenden Stellung positiv zurückzuhalten, so dass der Sitz (1) ein einstückiges Ganzes (10) bildet, das bereit ist, an dem Fussboden (2) des Fahrzeugs z.B. mittels eines Roboters eingebaut zu werden.

2. Vorrichtung nach Anspruch 1, dadurch gekennzeichnet, dass wenigstens einer (17) der Stützblöcke wenigstens einen das Aufklemmen dieses Klotzes an dem Fussboden (2) des Fahrzeugs gestattenden Teil (18) aufweist.

3. Vorrichtung nach Anspruch 1 oder 2, dadurch gekennzeichnet, dass wenigstens einer (27) der Unterlegklötze an einem (19) der Schenkel eines winkelförmigen Elementes (20), dessen anderer Schenkel (21) mit der Gleitschiene (3) fest verbunden ist, angeordnet ist.

4. Vorrichtung nach einem der vorangehenden Ansprüche, dadurch gekennzeichnet, dass die vorgenannten Unterlegklötze (7,17,27) mit einem Flansch (16) zum Halten eines Ueberzugs (9) am Fussboden (2) des Fahrzeugs versehen sind.

5. Vorrichtung nach einem der Ansprüche 1, 2 oder 4, dadurch gekennzeichnet, dass die Teile (11) der Unterlegklötze (7,17) zum Aufklemmen derselben an der Gleitschiene (3) die Gestalt von Ansatzzapfen oder dergleichen aufweisen.

## Claims

1. Device for the mounting and the fastening of a seat adapted to slide onto the floor of an automotive vehicle, of the type comprising at least one slide bar which is associated with a slideway made fast to the seat and which is fastened onto the floor of the vehicle through the medium of blocks or the like and with the assistance of screws, characterized in that the said blocks (7, 17, 27) comprise a portion (11) allowing the clipping of the blocks onto the slide bar (3) and at least some blocks (7, 27) are provided with at least one bore (12) adapted to positively retain the screws (8) in a position ready for being screwed onto the floor (2) so that the seat (1) forms a monobloc unit (10) ready to be mounted onto the floor (2) of the vehicle by means of a robot for example.

2. Device according to claim 1, characterized in that at least one (17) of the bearing blocks comprises at least one portion (18) allowing the clipping of this block onto the floor (2) of the vehicle.

3. Device according to claim 1 or 2, characterized in that at least one (27) of the blocks is mounted onto one (19) of the legs of a square-shaped element (20) the other leg (21) of which is made fast to the slide bar (3).

4. Device according to one of the foregoing claims, characterized in that the aforesaid blocks (7, 17, 27) are provided with a collar (16) for the holding of a lining (9) onto the floor (2) of the vehicle.

5. Device according to one of claims 1, 2 or 4, characterized in that the portions (11) of the blocks (7, 17) for clipping them onto the slide bar (3) exhibit the shape of nipples or the like.
